# EUROPEAN PATENT APPLICATION

(11) **EP 4 174 808 A1**
(43) Date of publication of application: **03.05.2023**
(21) Application number: 22194593.4
(22) Date of filing: 08.09.2022
(51) Int. Cl.: G07G 1/00, G06Q 20/20, G07G 1/12, G07G 3/00

(54) **ACTION DETERMINATION PROGRAM, ACTION DETERMINATION METHOD, AND ACTION DETERMINATION DEVICE**

(30) Priority: 27.10.2021 JP 2021175980
(71) Applicant: FUJITSU LIMITED, Kawasaki-shi, Kanagawa 211-8588 (JP)
(72) Inventor: USHIJIMA, Satoru, Kawasaki-shi, Kanagawa, 211-8588 (JP); ISHIDA, Ryo, Kawasaki-shi, Kanagawa, 211-8588 (JP); AOKI, Yasuhiro, Kawasaki-shi, Kanagawa, 211-8588 (JP)
(74) Representative: Hoffmann Eitle

(57) **Abstract**

An action determination program includes acquiring history information of a user operation on a checkout machine to which a product to be purchased is registered and that performs checkout processing of the registered product, specifying, based on an image obtained by capturing a user in front of the checkout machine, an action in which the user operates the checkout machine while grasping an object, and determining, based on the acquired history information, whether the action in which the user operates the checkout machine while grasping an object is an action in which a product to be purchased is registered to the checkout machine.

## Description

### [Technical Field]

The embodiment discussed herein is related to an action determination technology.

### [Background Art]

A self-checkout machine is widely employed at a store such as a supermarket or a convenience store. The self-checkout machine is a point-of-sale (POS) cash register system on which a user buying a product performs product bar-code reading and checks out. When the self-checkout machine is introduced, for example, it is possible to reduce labor cost and prevent checkout failure by a store clerk.

The self-checkout machine needs to detect a fraud by a user, such as bar-code reading omission. In a conventional technology for solving this problem, for example, a person in the store is traced by analyzing image data obtained by a camera, and timings at which the person being traced grasps and moves a product are specified. With such a conventional technology, it is possible to automatically determine whether bar-code reading operation is performed by a user.

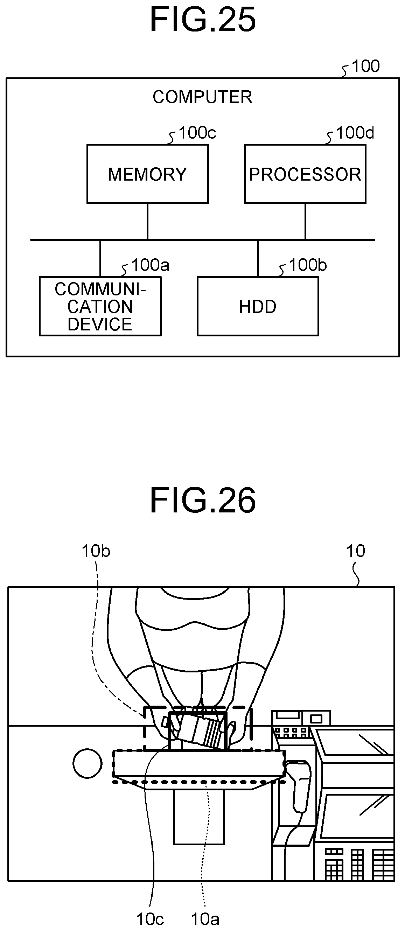

FIG. 26 is a diagram for describing such a conventional technology. In the example illustrated in FIG. 26, when image data 10 is input, a region 10a of a self-checkout machine is detected and a scanning region 10b of the self-checkout machine is detected. In the conventional technology, a region 10c of a product grasped by a user is detected, and it is determined that the user performs bar-code reading operation when the detected region 10c of the product enters the scanning region 10b.

### [Citation List]

### [Patent Literature]

Patent document 1: Japanese Laid-open Patent Publication No. 2020-53019

### [Summary of invention]

### [Technical Problem]

However, with the above-described conventional technology, a product is potentially confused with a person's possession or a personal item.

Specifically, at a store or the like, a significantly large number of kinds of products are sold and also products having short lifecycles are sold. Thus, even when an existing object recognition technology, for example, YOLO is used, it is difficult to generate a model with which an individual piece of each product, for example, a class name can be identified. This potentially contributes to wrong determination of a bar-code reading operation when a non-product object such as a wallet, a card, a smartphone, or a wearable terminal, which is used by a user for payment or the like, is moved to the scanning region 10b of the self-checkout machine illustrated in FIG. 26.

Accordingly, it is an object in one aspect of an embodiment of the present invention to provide an action determination program, an action determination method, and an action determination device that are capable of preventing confusion between a product and a personal possession.

### [Solution to Problem]

An aspect of an action determination program includes: acquiring history information of a user operation on a checkout machine to which a product to be purchased is registered and that performs checkout processing of the registered product; specifying, based on an image obtained by capturing a user in front of the checkout machine, an action in which the user operates the checkout machine while grasping an object; and determining, based on the acquired history information, whether the action in which the user operates the checkout machine while grasping an object is an action in which a product to be purchased is registered to the checkout machine.

### [Advantageous Effects of Invention]

According to an embodiment, it is possible to prevent confusion between a product and a personal possession.

### [Brief Description of Drawings]

FIG. 1 is a diagram illustrating an exemplary system according to the present embodiment;
FIG. 2 is a functional block diagram illustrating the configuration of an information processing device according to the present embodiment;
FIG. 3 is a diagram illustrating an exemplary data structure of product information;
FIG. 4 is a diagram illustrating an exemplary data structure of payment related information;
FIG. 5 is a diagram for describing model information;
FIG. 6 is a diagram illustrating an exemplary data structure of a data table;
FIG. 7 is a diagram illustrating an exemplary data structure of a determination table;
FIG. 8 is a diagram for describing processing at a tracing unit;
FIG. 9 is a diagram illustrating an exemplary mode transition;
FIG. 10 is a diagram for description of an exemplary payment preparation operation;
FIG. 11 is a diagram for describing another exemplary payment preparation operation;
FIG. 12 is a diagram illustrating exemplary mode determination;
FIG. 13 is a diagram for describing processing at a counting unit;
FIG. 14 is a diagram illustrating an exemplary data structure of registration operation information;
FIG. 15 is a flowchart (1) illustrating the procedure of tracing processing;
FIG. 16 is a flowchart (2) illustrating the procedure of tracing processing;
FIG. 17 is a flowchart illustrating the procedure of mode determination processing;
FIG. 18 is a flowchart illustrating the procedure of processing at the information processing device according to the present embodiment;
FIG. 19 is a flowchart illustrating the procedure of registration operation number-of-times counting processing;
FIG. 20 is a flowchart illustrating the procedure of personal item approaching number-of-times counting processing;
FIG. 21 is a diagram for describing processing at the counting unit;
FIG. 22 is a diagram illustrating an exemplary data structure of the determination table;
FIG. 23 is a diagram for describing other processing (1);
FIG. 24 is a diagram for describing other processing (2);
FIG. 25 is a diagram illustrating an exemplary hardware configuration; and
FIG. 26 is a diagram for describing a conventional technology.

### [Embodiments for Carrying Out the Invention]

Preferred embodiments will be explained with reference to accompanying drawings. Each embodiment merely indicates one example or aspect, and numerical values, function ranges, use scenes, and the like are not limited by the example. The embodiments may be combined as appropriate without inconsistency in processing contents.

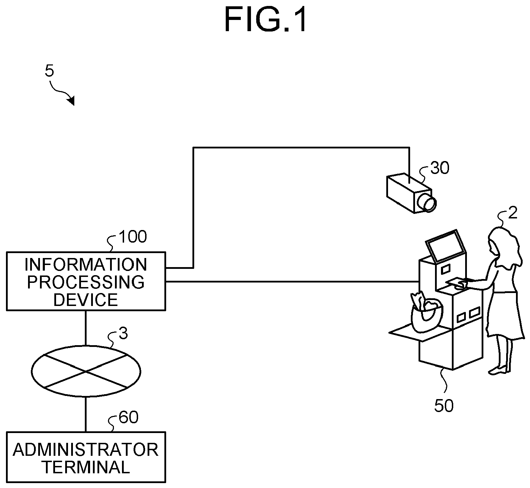

FIG. 1 is a diagram illustrating an exemplary system according to the present embodiment. As illustrated in FIG. 1, this system 5 includes a camera 30, a self-checkout machine 50, an administrator terminal 60, and an information processing device 100.

The information processing device 100 is connected to the camera 30 and the self-checkout machine 50. The information processing device 100 is connected to the administrator terminal 60 through a network 3. The camera 30 and the self-checkout machine 50 may be connected to the information processing device 100 through the network 3.

The camera 30 is a camera configured to capture a video of a region including the self-checkout machine 50. The camera 30 transmits data of the video to the information processing device 100. In the following description, the data of the video is referred to as "video data".

The video data includes a plurality of temporally sequential image frames. Each image frame is provided with a frame number in temporally sequential order. One image frame is a still image captured by the camera 30 at a timing.

The self-checkout machine 50 is a POS cash register system with which a user 2 purchasing products performs product bar-code reading and checks out. For example, when the user 2 moves a purchase target product to a scanning region of the self-checkout machine 50, the self-checkout machine 50 scans the bar code of the product.

When having completed product scanning through repeated execution of the above-described operation, the user 2 operates, for example, a touch panel of the self-checkout machine 50 to make a checkout request. Having received the checkout request, the self-checkout machine 50 presents the number of purchase target products, the purchase money amount thereof, and the like and executes checkout processing. The self-checkout machine 50 stores history information of user operations on the self-checkout machine 50 in a storage unit and transmits the history information as product information to the information processing device 100. For example, the history information may include, as the product information, information of products scanned from the start of scanning by the user 2 until the checkout request has been made.

The administrator terminal 60 is a terminal device used by the administrator of a store. The administrator terminal 60 receives an issued alert and the like from the information processing device 100.

The information processing device 100 is a device configured to issue an alert to the administrator terminal 60 based on a number of times that the user 2 performs operation to register a product to the self-checkout machine 50 and the purchase count of products, the operation being specified based on the video data acquired from the camera 30, the purchase count being specified based on the product information. In the following description, the number of times of operation that the user 2 performs to register a product to the self-checkout machine 50 is referred to as a "registration operation number of times".

For example, when the registration operation number of times is different from the purchase count, it can be thought that product checkout omission has occurred. Thus, it is possible to detect product checkout omission in accordance with an alert issued by the information processing device 100 based on the registration operation number of times and the purchase count.

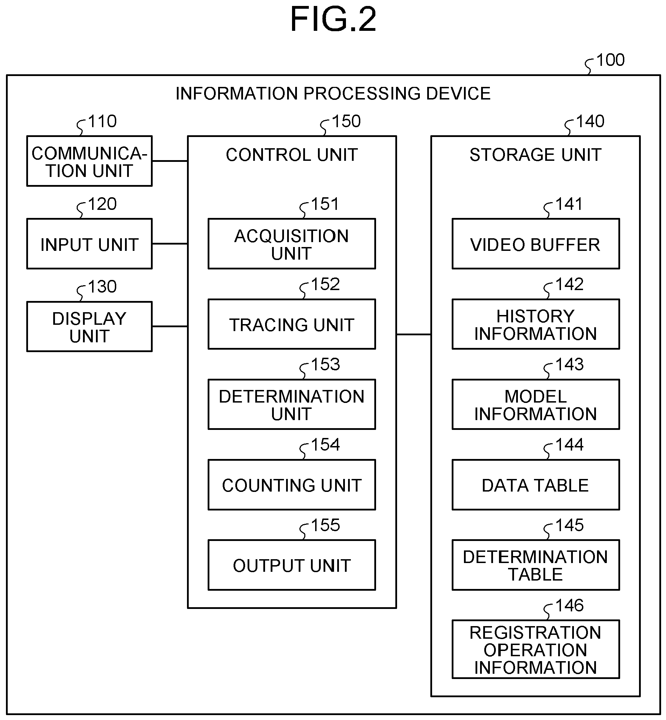

The following describes an exemplary configuration of the information processing device 100 illustrated in FIG. 1. FIG. 2 is a functional block diagram illustrating the configuration of the information processing device according to the present embodiment. As illustrated in FIG. 2, the information processing device 100 includes a communication unit 110, an input unit 120, a display unit 130, a storage unit 140, and a control unit 150.

The communication unit 110 executes data communication among the camera 30, the self-checkout machine 50, the administrator terminal 60, and the like. For example, the communication unit 110 receives the video data from the camera 30. The communication unit 110 receives the history information of user operations on the self-checkout machine 50 from the self-checkout machine 50.

The input unit 120 is an input device configured to input various kinds of information to the information processing device 100. The input unit 120 corresponds to a keyboard, a mouse, a touch panel, or the like.

The display unit 130 is a display device configured to display information output from the control unit 150. The display unit 130 corresponds to a liquid crystal display, an organic electro luminescence (EL) display, a touch panel, or the like.

The storage unit 140 includes a video buffer 141, history information 142, model information 143, a data table 144, a determination table 145, and registration operation information 146. The storage unit 140 is implemented, for example, by a semiconductor memory element such as a random access memory (RAM) or a flash memory or by a storage device such as a hard disk or an optical disk.

The video buffer 141 stores video data captured by the camera 30. The video data includes a plurality of temporally sequential image frames.

The history information 142 is the history information of user operations on the self-checkout machine 50. For example, the history information 142 may include product information 142A and payment related information 142B.

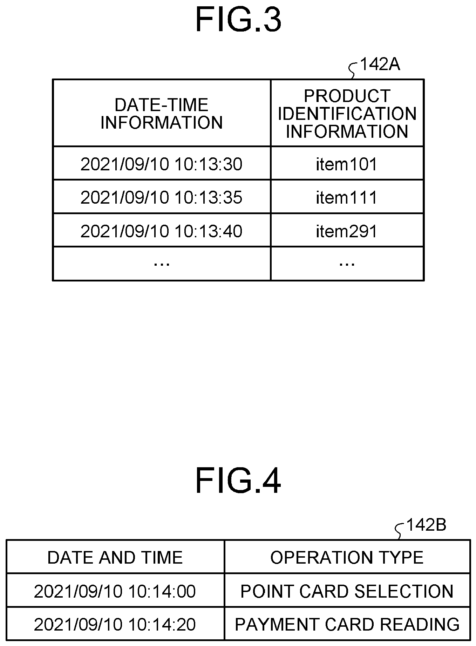

The product information 142A is information acquired from the self-checkout machine 50 upon an operation to register a product to be purchased to the self-checkout machine 50. For example, the product information 142A includes information of products scanned from the start of scanning by the user 2 until a checkout request has been made. FIG. 3 is a diagram illustrating an exemplary data structure of the product information. As illustrated in FIG. 3, the product information 142A associates date-time information and product identification information.

The date-time information indicates date and time at which the bar code of a product is read by the self-checkout machine 50. The product identification information is information that identifies a product. For example, the first row in FIG. 3 indicates that the bar code of a product with the product identification information of "item101" is scanned at the date and time of "10:13:30 September 10, 2021".

The payment related information 142B is information acquired from the self-checkout machine 50 upon an operation performed for payment for a product registered to the self-checkout machine 50. Hereinafter, an operation performed for payment is referred to as "payment related operation" in some cases. For example, the payment related operation may include a payment operation to make payment for a product. In addition, the payment related operation may include payment preparation operations such as an operation to designate a product payment method and an operation related to a valuable value, such as a point, which is provided in accordance with the money amount of a product.

FIG. 4 is a diagram illustrating an exemplary data structure of the payment related information. As illustrated in FIG. 4, the payment related information 142B may be data in which items such as date and time and an operation type are associated. The "date and time" indicate date and time at which the payment related operation is performed. The "operation type" indicates a category into which the payment related operation is classified. For example, the first row in FIG. 4 means that an operation to select the kind of a point card is performed at the date and time of "10:14:00 September 10, 2021".

The model information 143 is a neural network (NN) configured to output information related to mutual interaction between a user (human) and a product (object) when an image frame is input. For example, the model information 143 corresponds to human-object interaction detection (HOID).

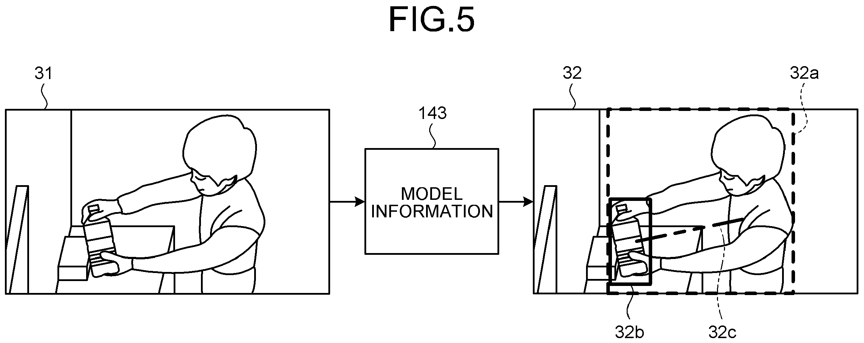

FIG. 5 is a diagram for describing the model information. As illustrated in FIG. 5, detection information 32 is output when an image frame 31 is input to the model information 143. The detection information 32 includes user region information 32a, product region information 32b, and mutual interaction information 32c.

The user region information 32a indicates the region of a user included in the image frame 31 with coordinates (x and y coordinates of the upper-left corner and x and y coordinates of the lower-right corner). The product region information 32b indicates the region of a product included in the image frame 31 with coordinates (x and y coordinates of the upper-left corner and x and y coordinates of the lower-right corner). The product region information 32b also includes a class name unique to the product.

The mutual interaction information 32c includes the probability value of mutual interaction between the user and the product detected in the image frame 31 and the class name of the mutual interaction. The class name of the mutual interaction is set to be a class name such as "grasping (the user is grasping the product)".

The model information 143 according to the present embodiment outputs the detection information 32 only when mutual interaction exists between the user and the product. For example, the detection information 32 is output when an image frame of a state in which the user is grasping the product is input to the model information 143. The detection information 32 is not output when an image frame of a state in which the user is not grasping the product is input to the model information 143.

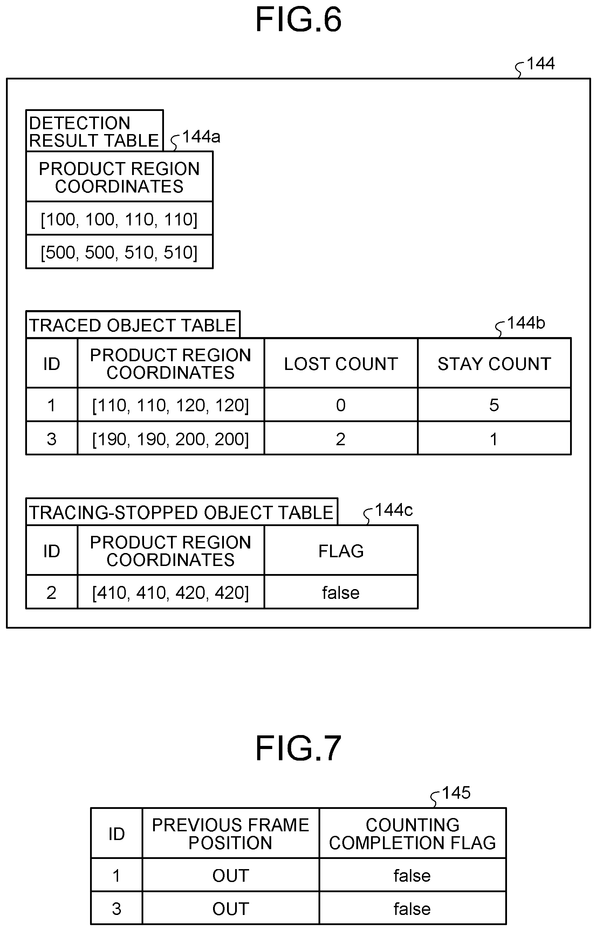

The data table 144 is a data table used to trace a product detected in image frames. FIG. 6 is a diagram illustrating an exemplary data structure of the data table. As illustrated in FIG. 6, the data table 144 includes a detection result table 144a, a traced object table 144b, and a tracing-stopped object table 144c.

The detection result table 144a is a table holding the coordinates of a product region output from the model information 143. In the following description, the coordinates of the product region are referred to as "product region coordinates". The product region coordinates are expressed as [a first element, a second element, a third element, a fourth element]. The first element indicates the x coordinate of the upper-left corner of the product region. The second element indicates the y coordinate of the upper-left corner of the product region. The third element indicates the x coordinate of the lower-right corner of the product region. The fourth element indicates the y coordinate of the lower-right corner of the product region.

The traced object table 144b is a table holding information related to a product being traced. The traced object table 144b includes an identification (ID), product region coordinates, a lost count, and a stay count. The ID is identification information provided to the product region coordinates. The product region coordinates indicate the coordinates of a product region.

The lost count indicates the number of image frames counted when a product corresponding to the product region coordinates is not detected. The stay count indicates the number of image frames counted when the product corresponding to the product region coordinates is not moving.

The tracing-stopped object table 144c is a table holding information related to a product stopped being traced. The tracing-stopped object table 144c includes an ID, product region coordinates, and a flag. The ID is identification information provided to the product region coordinates. The product region coordinates indicate the coordinates of a product region.

The flag is information indicating whether to return the ID and the product region coordinates in the tracing-stopped object table 144c to the traced object table 144b. The flag being set to "true" indicates that the ID and product region coordinates of a corresponding record are to be returned to the traced object table 144b. The flag being set to "false" indicates that the ID and product region coordinates of the corresponding record are not to be returned to the traced object table 144b.

Description will be made with reference to FIG. 6 again. The determination table 145 is a table used to count the registration operation number of times. In the present embodiment, the registration operation number of times is incremented by one when product region coordinates specified based on an image frame have moved from the outside of a scanning region set in advance to the inside of the scanning region. With the determination table 145, the information processing device 100 can increment the registration operation number of times by only one even when the same product moves in and out of the scanning region a plurality of times.

FIG. 7 is a diagram illustrating an exemplary data structure of the determination table. As illustrated in FIG. 7, the determination table 145 associates an ID, a previous frame position, and a counting completion flag. The ID is identification information provided to product region coordinates. The previous frame position is information identifying whether product region coordinates detected in the previous image frame is outside or inside the scanning region.

The previous frame position is set to "OUT" when the product region coordinates of a corresponding ID, which are detected in the previous image frame are outside the scanning region. The previous frame position is set to "IN" when the product region coordinates detected in the previous image frame are inside the scanning region. The counting completion flag is a flag that identifies whether processing of incrementing the registration operation number of times by one is performed for the corresponding ID.

In the present embodiment, the counting completion flag is initially set to "false". The registration operation number of times is incremented by one when the product region coordinates of the corresponding ID, which are detected based on the current image frame position are set to "IN" whereas the previous image frame position of the product region coordinates of the corresponding ID is set to "OUT". In this case, the counting completion flag is updated from "false" to "true".

The registration operation information 146 is information related to a product registration operation. The registration operation information 146 may include the registration operation number of times. In addition, the registration operation information 146 may include information associating identification information of an object for which the product registration operation is specified with date and time at which the product registration operation is specified.

Description will be made with reference to FIG. 2 again. The control unit 150 includes an acquisition unit 151, a tracing unit 152, a determination unit 153, a counting unit 154, and an output unit 155. The control unit 150 is implemented by a hardware processor such as a central processing unit (CPU) or a micro processing unit (MPU). The control unit 150 may be executed by a hardwired logic circuit such as an application specific integrated circuit (ASIC) or a field programmable gate array (FPGA).

The acquisition unit 151 acquires video data from the camera 30 and stores the acquired video data in the video buffer 141. The acquisition unit 151 acquires the history information 142 from the self-checkout machine 50 and stores the acquired history information 142 in the storage unit 140.

The tracing unit 152 traces the product region coordinates based on the video data (temporally sequential image frames) stored in the video buffer 141. For example, the tracing unit 152 repeatedly executes processing of sequentially inputting image frames to the model information 143, specifying the product region coordinates, and updating the data table 144. The following describes exemplary processing at the tracing unit 152.

The tracing unit 152 inputs an image frame stored in the video buffer 141 to the model information 143 and acquires the product region coordinates included in the detection information. The tracing unit 152 registers the product region coordinates to the detection result table 144a. In the following description, the product region coordinates in the detection result table 144a are referred to as a "first set of product region coordinates". The product region coordinates in the traced object table 144b are referred to as a "second set of product region coordinates". The product region coordinates in the tracing-stopped object table 144c are referred to as a "third set of product region coordinates".

The tracing unit 152 calculates a "similarity" based on the distance between the centers of respective sets of product region coordinates as comparison targets. The similarity is larger as the distance between the centers of respective sets of product region coordinates as comparison targets is shorter. The relation between the inter-center distance and the similarity is defined in advance.

The tracing unit 152 compares the first set of product region coordinates with each third set of product region coordinates in the tracing-stopped object table 144c and determines whether there is a pair of the first set of product region coordinates and the third set of product region coordinates between which the similarity is equal to or larger than a threshold Th1. The threshold Th1 is set in advance.

When there is a pair of the first set of product region coordinates and the third set of product region coordinates between which the similarity is equal to or larger than the threshold Th1, the tracing unit 152 executes the following processing in the tracing-stopped object table 144c. The tracing unit 152 sets "true" to the flag of an entry including the third set of product region coordinates for which the similarity with the first set of product region coordinates is equal to or larger than the threshold Th1. In addition, the tracing unit 152 deletes, in the detection result table 144a, an entry including the first set of product region coordinates for which the similarity with the third set of product region coordinates is equal to or larger than the threshold Th1.

The tracing unit 152 compares the first set of product region coordinates with each second set of product region coordinates in the traced object table 144b and specifies the maximum value of the similarity between the first set of product region coordinates and the second set of product region coordinates. When the maximum value of the similarity is equal to or larger than a threshold Th3, the tracing unit 152 determines that "the corresponding product is not moving". When the maximum value of the similarity is equal to or larger than a threshold Th2, the tracing unit 152 determines that "it is possible to trace the corresponding product". When the maximum value of the similarity is smaller than the threshold Th2, the tracing unit 152 determines that "it is impossible to trace the corresponding product". The thresholds Th2 and Th3 are set in advance. The threshold Th3 is set to be larger than the threshold Th2.

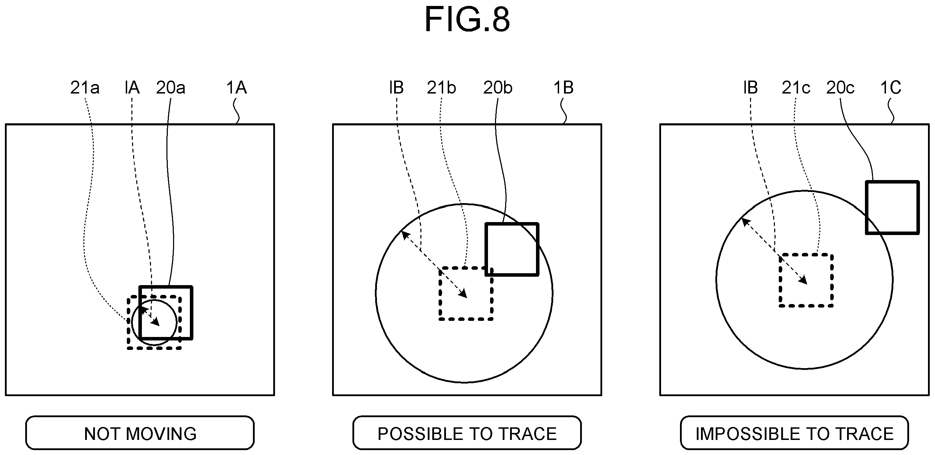

FIG. 8 is a diagram for describing processing at the tracing unit. In Case 1A in FIG. 8, a product region identified by the first set of product region coordinates is specified as product region 20a, and a product region identified by the second set of product region coordinates is specified as product region 21a. When the distance between the product regions 20a and 21a is shorter than a distance lA (when the similarity based on the distance is equal to or larger than the threshold Th3), the tracing unit 152 determines that "the corresponding product is not moving".

When having determined that "the corresponding product is not moving", the tracing unit 152 increments, by one, the stay count in an entry corresponding to the product region 21a (the second set of product region coordinates) in the traced object table 144b.

In Case 1B in FIG. 8, a product region identified by the first set of product region coordinates is specified as product region 20b, and a product region identified by the second set of product region coordinates is specified as product region 21b. When the distance between the product regions 20b and 21b is shorter than a distance lB (when the similarity based on the distance is equal to or larger than the threshold Th2), the tracing unit 152 determines that "it is possible to trace the corresponding product".

When having determined that "it is possible to trace the corresponding product", the tracing unit 152 updates the second set of product region coordinates in an entry corresponding to the product region 21b (the second set of product region coordinates) in the traced object table 144b with the first set of product region coordinates. The tracing unit 152 sets the stay count in the entry corresponding to the product region 21b (the second set of product region coordinates) in the traced object table 144b to zero.

In Case 1C in FIG. 8, a product region identified by the first set of product region coordinates is specified as product region 20c, and a product region identified by the second set of product region coordinates is specified as product region 21c. When the distance between the product regions 20c and 21c is equal to or longer than the distance lB (when the similarity based on the distance is smaller than the threshold Th2), the tracing unit 152 determines that "it is impossible to trace the corresponding product".

When having determined that "it is impossible to trace the corresponding product", the tracing unit 152 registers, to the traced object table 144b, a new entry of the first set of product region coordinates corresponding to the product region 20c. When registering the new entry, the tracing unit 152 allocates a new ID and sets the stay count and the lost count to zero.

The tracing unit 152 increments, by one, the lost count in an entry including the second set of product region coordinates for which the similarity with the first set of product region coordinates is smaller than the threshold Th2 among the entries in the traced object table 144b.

The tracing unit 152 extracts any entry in which the lost counter exceeds a threshold Th4 among the entries in the traced object table 144b. The tracing unit 152 moves any entry (the ID and the second set of product region coordinates) in which the value of the stay counter is equal to or larger than a threshold Th5 among the extracted entries to the tracing-stopped object table 144c, and sets "false" to the flag.

The tracing unit 152 deletes any entry in which the value of the stay counter is smaller than the threshold Th5 among the extracted entries.

The tracing unit 152 moves any entry in which the flag is "true" among the entries in the tracing-stopped object table 144c to the traced object table 144b, and sets the stay counter to zero.

Each time a new entry is registered to the detection result table 144a, the tracing unit 152 repeatedly executes the above-described processing and updates the traced object table 144b and the tracing-stopped object table 144c.

Description will be made with reference to FIG. 2 again. The determination unit 153 determines, based on the history information 142, whether an action in which the user 2 operates the self-checkout machine 50 while grasping an object is an action in which a product to be purchased is registered to the self-checkout machine 50.

A user operation on the self-checkout machine 50 may include a first mode in which the bar code of a product to be purchased is read and the product is registered to the self-checkout machine 50 and a second mode in which the product registered to the self-checkout machine 50 is checked out.

For example, there is no way to purchase a product in the initial state of checkout by the user 2, for example, in a state in which the product is yet to be registered to the self-checkout machine 50, and thus the initial state stays in the first mode. Such an initial state of checkout may be identified as a timing at which checkout by a user using the self-checkout machine 50 before the user 2 is completed.

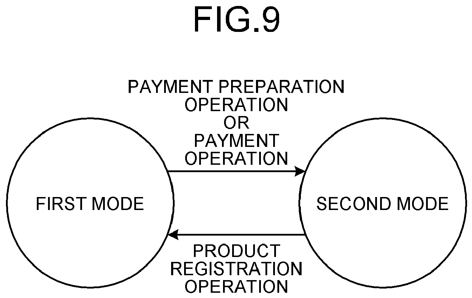

The two modes of the first and second modes may each transition to the other mode on a condition exemplarily described below. FIG. 9 is a diagram illustrating exemplary mode transition. As illustrated in FIG. 9, the first mode may transition to the second mode when a payment preparation operation or a payment operation is performed. The second mode may transition to the first mode when a product registration operation to register a product to the self-checkout machine 50 is performed.

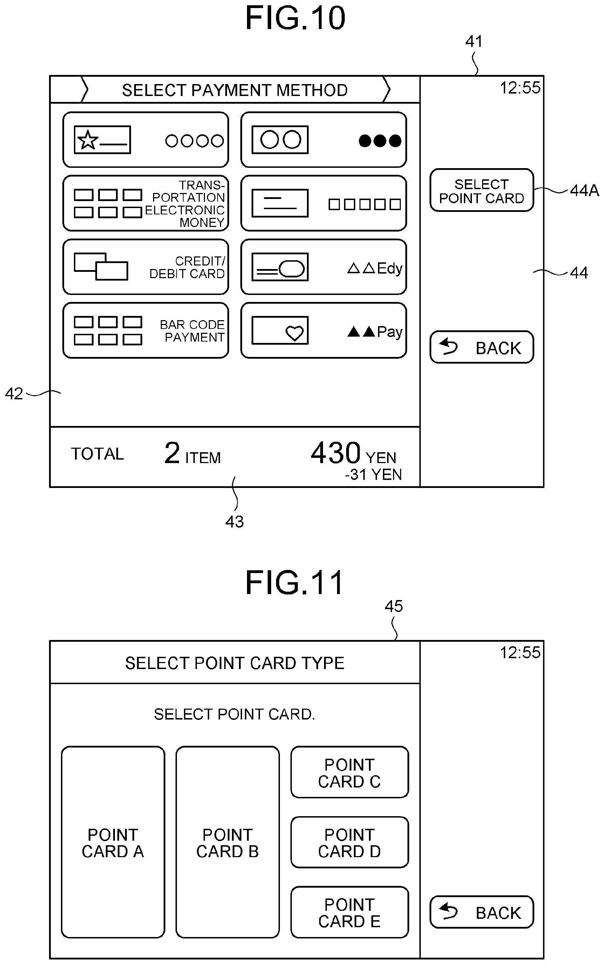

FIG. 10 is a diagram for describing an exemplary payment preparation operation. FIG. 10 illustrates, as an exemplary image displayed on a display unit of the self-checkout machine 50, a checkout screen 41 for checking out products registered to the self-checkout machine 50.

As illustrated in FIG. 10, the checkout screen 41 includes a payment method selection area 42 in which a product payment method is selected, a product information display area 43 in which information of products to be purchased by the user 2 is displayed, and an other-function call area 44 in which other functions related to checkout are called.

GUI components corresponding to various payment methods such as cash, electronic money, credit card, debit card, payment using a payment service are disposed in the payment method selection area 42. An operation on any of these GUI components corresponds to one of preliminary actions for making payment for products registered to the self-checkout machine 50, in other words, purchasing products, and thus can be regarded as a payment preparation operation.

The number of purchase products and the total money amount of all purchase products are displayed in the product information display area 43. In addition, for example, a discount money amount may be displayed as well when discount is applied to any purchase product.

The other-function call area 44 includes a point card selection button 44A for calling a point card selection screen on which the kind of a point card to be provided with points corresponding to the money amount of purchase products is selected. A point card selection screen illustrated in FIG. 11 may be displayed on the self-checkout machine 50 when the point card selection button 44A is operated.

FIG. 11 is a diagram for describing another exemplary payment preparation operation. As illustrated in FIG. 11, a GUI component corresponding to each kind of a point card is disposed on a point card selection screen 45. An operation on any of these GUI components corresponds to one of preliminary actions for making payment for products registered to the self-checkout machine 50, in other words, purchase products and thus can be regarded as a payment preparation operation.

In this manner, the payment preparation operations exemplarily illustrated in FIGS. 10 and 11 correspond to preliminary actions for making payment for purchase products, and thus are more likely to be followed by a payment operation than by a product registration operation. Accordingly, a duration after a payment preparation operation can be estimated as the second mode.

A timing at which the history of a payment operation is acquired is likely to be after a non-product object such as a wallet, a card, a smartphone, or a wearable terminal approaches a coin-note slot or a scanner of the self-checkout machine 50. Accordingly, a duration before the payment operation can be estimated as the second mode.

By exploiting such characteristics of a payment preparation operation and a payment operation, the determination unit 153 determines an interval corresponding to the first mode and an interval corresponding to the second mode in a checkout duration of the initial state of checkout by the user 2 to checkout completion.

For example, the determination unit 153 monitors a user operation on the self-checkout machine 50. When a new operation history is stored in the history information 142 by the acquisition unit 151, the determination unit 153 determines whether the operation history indicates a payment operation.

When the operation history indicates a payment operation, the determination unit 153 searches for a payment preparation operation among operation histories included in a checkout duration corresponding to the payment operation in the history information 142. Then, when a payment preparation operation is hit, the determination unit 153 further determines whether a product registration operation is included in the interval from the payment preparation operation that is hit in the search until the payment operation acquired by the acquisition unit 151.

When no product registration operation is included, the determination unit 153 determines, to be the second mode, the duration of the payment preparation operation until the payment operation. When no payment preparation operation is hit in the search of the operation history in the checkout interval or when a product registration operation is included, the determination unit 153 determines, to be the second mode, a particular duration such as the interval of 30 seconds up to the payment operation. Then, the determination unit 153 determines, to be the first mode, the other interval than the interval determined to be the second mode in the checkout duration.

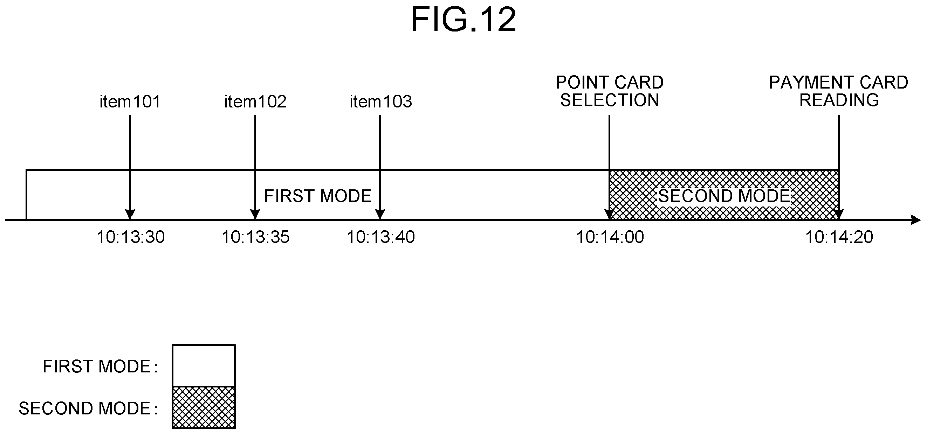

FIG. 12 is a diagram illustrating exemplary mode determination. FIG. 12 illustrates an example in which mode determination is executed based on the history information 142 including the product information 142A illustrated in FIG. 3 and the payment related information 142B illustrated in FIG. 4. According to the example of the product information 142A and the payment related information 142B, operations on the self-checkout machine 50 by the user 2 are performed in the order of a product registration operation of "item101", a product registration operation of "item102", a product registration operation of "item103", a point card selection operation, and a payment card reading operation. In this case, no product registration operation is included in the interval from the point card selection operation performed at 10:14 until the payment card reading operation performed at 10:14:20. Accordingly, the interval from 10:14 to 10:14:20 is determined to be the second mode, and the other interval is determined to be the first mode.

After such mode determination, when an action in which the user 2 operates the self-checkout machine 50 while grasping an object is detected in a duration in which the second mode is executed at the self-checkout machine 50, the determination unit 153 determines that the object is not a product to be purchased.

Description will be made with reference to FIG. 2 again. The counting unit 154 specifies, based on the traced object table 144b in the data table 144, an operation in which a user registers a product to the self-checkout machine 50, and counts the registration operation number of times that the operation is performed. The counting unit 154 registers the registration operation number of times as the registration operation information 146 to the storage unit 140. The following describes exemplary processing at the counting unit 154.

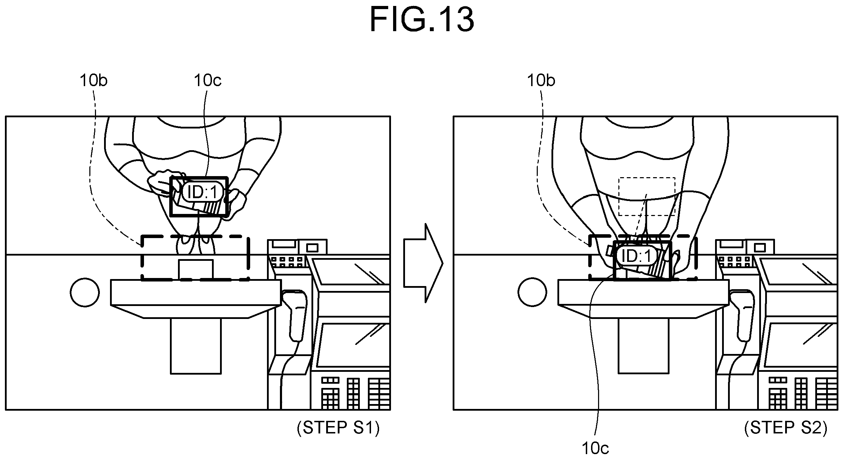

FIG. 13 is a diagram for describing processing at the counting unit. Step S1 in FIG. 13 will be described below. The counting unit 154 holds the coordinates of a scanning region 10b in advance. The counting unit 154 refers to the traced object table 144b, and when an entry of a new ID is added, the counting unit 154 adds, to the determination table 145, an entry in which an ID identical to the new ID is set. When adding the entry to the determination table 145, the counting unit 154 sets "false" to the counting completion flag. In the following description, for the purpose of description, the ID added to the determination table 145 is referred to as an ID "1". The ID "1" is an ID provided to the second set of product region coordinates corresponding to a region 10c of a product.

The counting unit 154 compares the second set of product region coordinates in the entry of the ID "1" in the traced object table 144b with the scanning region 10b. When the second set of product region coordinates is not included in the scanning region 10b, the counting unit 154 sets "OUT" to the previous frame position in the entry of the ID "1" added to the determination table 145. When the second set of product region coordinates is included in the scanning region 10b, the counting unit 154 sets "IN" to the previous frame position in the entry of the ID "1" added to the determination table 145. In the example illustrated at step S1 in FIG. 13, the region 10c of the product corresponding to the second set of product region coordinates is not included in the scanning region 10b, and thus the previous frame position in the entry of the ID "1" added to the determination table 145 is set to "OUT".

Step S2 in FIG. 13 will be described below. The counting unit 154 monitors the traced object table 144b, and compares the second set of product region coordinates corresponding to the ID "1" with the scanning region 10b each time the traced object table 144b is updated. When the second set of product region coordinates (the region 10c of the product) corresponding to the ID "1" has moved to a region included in the scanning region 10b, the counting unit 154 refers to the entry of the ID "1" in the determination table 145 and refers to the previous frame position and the counting completion flag.

When the previous frame position is "OUT" and the counting completion flag is "false" in the entry of the ID "1" in the determination table 145, the counting unit 154 increments the registration operation number of times by one. After having incremented the registration operation number of times by one, the counting unit 154 updates the previous frame position to "IN" and updates the counting completion flag to "true". When the registration operation number of times is incremented in this manner, the counting unit 154 adds, to the registration operation information 146, an entry associating the ID "1" of an object for which a product registration operation is specified with date and time at which the product registration operation of the ID "1" is specified.

When the previous frame position is "IN" or when the counting completion flag is "true", the counting unit 154 skips processing of incrementing the registration operation number of times by one.

The counting unit 154 repeatedly executes the above-described processing each time an entry of a new ID is added to the traced object table 144b. When an ID identical to the ID of the entry added to the traced object table 144b is identical to the ID of an entry registered to the determination table 145, the counting unit 154 skips processing of registering an entry corresponding to the new ID to the determination table 145.

While such counting of the registration operation number of times is performed, the counting unit 154 counts a number of times that a non-purchase-product object such as a personal item approaches the self-checkout machine 50. For example, the counting unit 154 determines, for each entry of the registration operation information 146, whether date and time at which a product registration operation is specified is in the duration of the second mode.

When the date and time at which a product registration operation is specified is in the duration of the second mode, the personal item approach number of times is incremented by one. When the date and time at which a product registration operation is specified is not in the duration of the second mode, in other words, is in the duration of the first mode, processing of incrementing the personal item approach number of times by one is skipped.

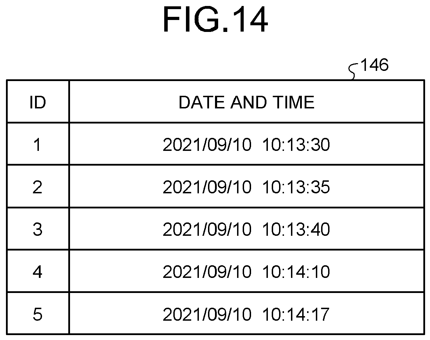

FIG. 14 is a diagram illustrating an exemplary data structure of the registration operation information. In examples of the first to third rows of the registration operation information 146 illustrated in FIG. 14, the date and time at which a product registration operation is specified belongs to the duration of the first mode as illustrated in FIG. 12, and thus the personal item approach number of times is not incremented. However, in cases of the fourth and fifth rows of the registration operation information 146, the date and time at which a product registration operation is specified belongs to the duration of the second mode as illustrated in FIG. 12, and thus the personal item approach number of times is incremented. As a result, the personal item approach number of times is counted to be "2".

After such counting of the personal item approach number of times, the counting unit 154 subtracts the personal item approach number of times from the registration operation number of times.

The output unit 155 outputs an alert to the administrator terminal 60 based on the history information 142 and the registration operation information 146. The following describes exemplary processing at the output unit 155.

The output unit 155 acquires the product information 142A and specifies the purchase count. For example, the output unit 155 specifies, as the purchase count, the number of records among which the date-time information is different in the product information 142A.

When the purchase count is different from the registration operation number of times from which the personal item approach number of times is subtracted, the output unit 155 transmits an alert to the administrator terminal 60. For example, when the purchase count is smaller than the registration operation number of times from which the personal item approach number of times is subtracted, checkout omission is likely and thus the output unit 155 outputs an alert of checkout omission detection to the administrator terminal 60.

When the purchase count is equal to the registration operation number of times from which the personal item approach number of times is subtracted, the output unit 155 skips processing of outputting an alert.

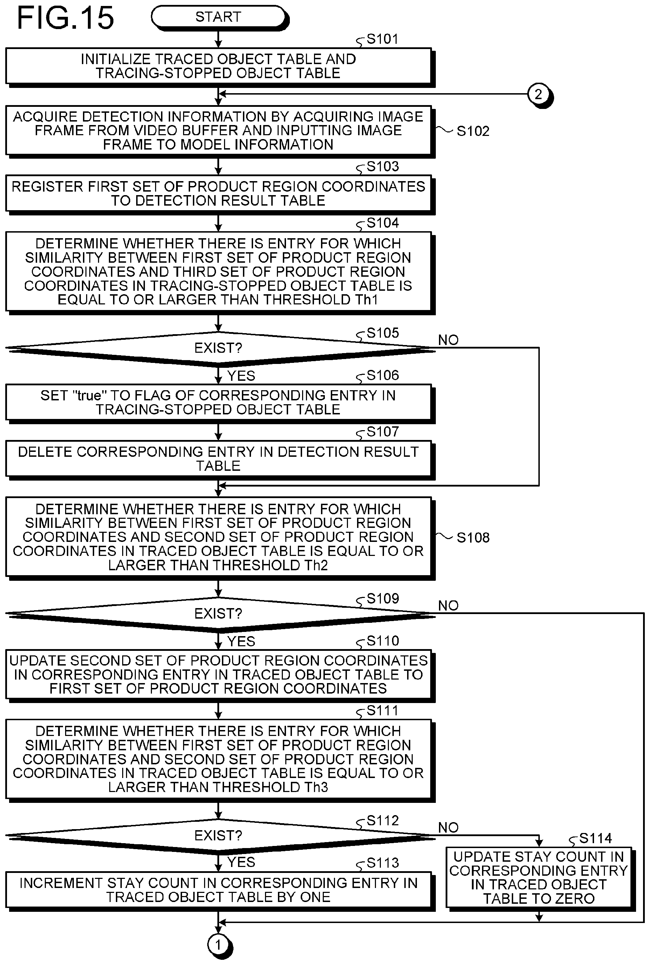

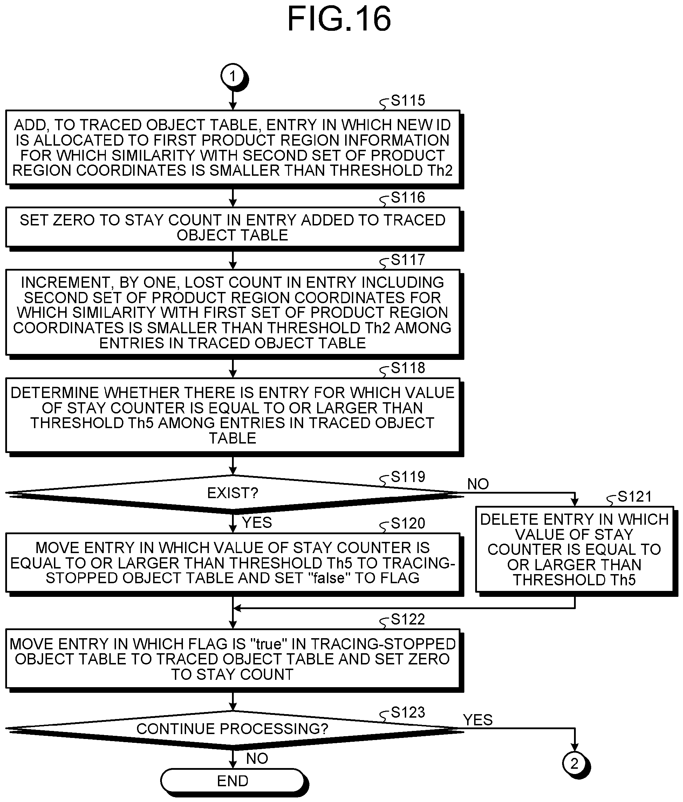

The following describes exemplary tracing processing executed by the tracing unit 152 of the information processing device 100 according to the present embodiment. FIGS. 15 and 16 are flowcharts illustrating the procedure of the tracing processing. As illustrated in FIG. 15, the tracing unit 152 of the information processing device 100 initializes the traced object table 144b and the tracing-stopped object table 144c (step S101).

The tracing unit 152 acquires detection information by acquiring an image frame from the video buffer 141 and inputting the image frame to the model information 143 (step S102). The tracing unit 152 registers the first set of product region coordinates included in the detection information to the detection result table 144a (step S103).

The tracing unit 152 determines whether there is an entry for which the similarity between the first set of product region coordinates and the third set of product region coordinates in the tracing-stopped object table 144c is greater than or equal to the threshold Th1 (step S104). When such an entry exists (Yes at step S105), the tracing unit 152 proceeds to step S106. When such an entry does not exist (No at step S105), the tracing unit 152 proceeds to step S108.

The tracing unit 152 sets "true" to the flag of the corresponding entry in the tracing-stopped object table 144c (step S106). The tracing unit 152 deletes the corresponding entry in the detection result table 144a (step S107).

The tracing unit 152 determines whether there is an entry for which the similarity between the first set of product region coordinates and the second set of product region coordinates in the traced object table 144b is equal to or larger than the threshold Th2 (step S108). When such an entry exists (Yes at step S109), the tracing unit 152 proceeds to step S110. When such an entry does not exist (No at step S109), the tracing unit 152 proceeds to step S115 in FIG. 16.

The tracing unit 152 updates the second set of product region coordinates in the corresponding entry in the traced object table 144b to the first set of product region coordinates (step S110). The tracing unit 152 determines whether there is an entry for which the similarity between the first set of product region coordinates and the second set of product region coordinates in the traced object table 144b is equal to or larger than the threshold Th3 (step S111).

When such an entry exists (Yes at step S112), the tracing unit 152 increments the stay count in the corresponding entry in the traced object table 144b by one (step S113) and proceeds to step S115 in FIG. 16.

When such an entry does not exist (No at step S112), the tracing unit 152 updates the stay count in the corresponding entry in the traced object table 144b to zero (step S114) and proceeds to step S115 in FIG. 16.

Description continues with reference to FIG. 16. The tracing unit 152 adds, to the traced object table 144b, an entry in which a new ID is allocated to the first set of product region coordinates for which the similarity with the second set of product region coordinates is smaller than the threshold Th2 (step S115). The tracing unit 152 sets the stay count in the entry added to the traced object table 144b to zero (step S116).

The tracing unit 152 increments, by one, the lost count in an entry including the second set of product region coordinates for which the similarity with the first set of product region coordinates is smaller than the threshold Th2 among the entries in the traced object table 144b (step S117).

The tracing unit 152 determines whether there is an entry in which the value of the stay counter is equal to or larger than the threshold Th5 among the entries in the traced object table 144b (step S118). When such an entry exists (Yes at step S119), the tracing unit 152 proceeds to step S120. When such an entry does not exist (No at step S119), the tracing unit 152 proceeds to step S121.

The tracing unit 152 moves any entry in which the value of the stay counter is equal to or larger than the threshold Th5 to the tracing-stopped object table 144c and sets "false" to the flag thereof (step S120). The tracing unit 152 moves any entry in which the flag is "true" in the tracing-stopped object table 144c to the traced object table 144b and sets the stay count to zero(step S122). The tracing unit 152 deletes any entry in which the value of the stay counter is equal to or larger than the threshold Th5 (step S121), and proceeds to step S122.

When the processing is to be continued (Yes at step S123), the tracing unit 152 proceeds to step S102 in FIG. 15. When the processing is not to be continued (No at step S123), the tracing unit 152 ends the processing.

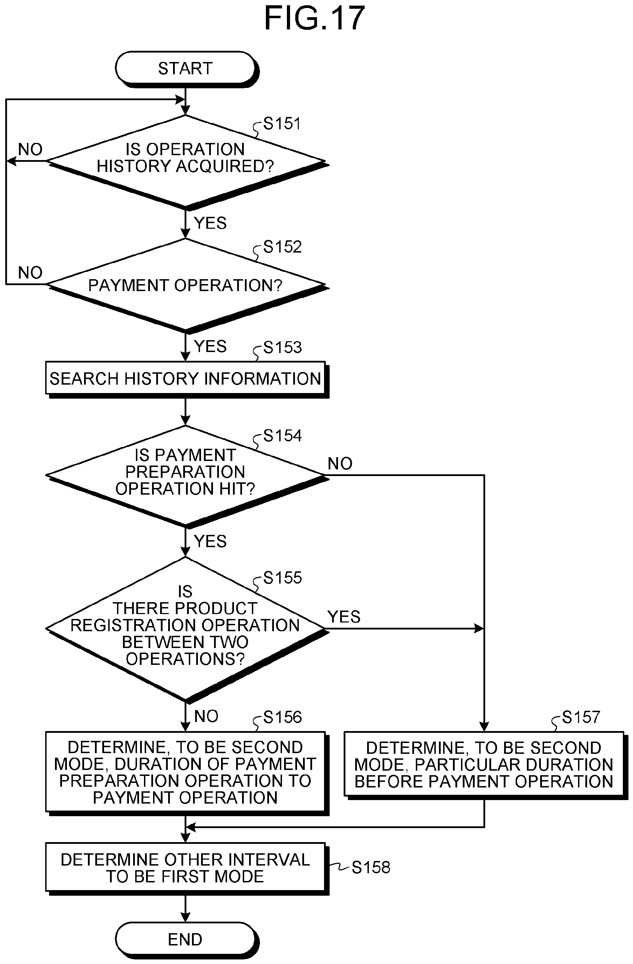

The following describes exemplary tracing processing executed by the determination unit 153 of the information processing device 100 according to the present embodiment. FIG. 17 is a flowchart illustrating the procedure of mode determination processing. As illustrated in FIG. 17, when a new operation history is stored in the history information 142 by the acquisition unit 151 (Yes at step S151), the determination unit 153 determines whether the operation history indicates a payment operation (step S152).

When the operation history indicates a payment operation (Yes at step S152), the determination unit 153 searches for a payment preparation operation among operation histories included in a checkout duration corresponding to the payment operation in the history information 142 (step S153).

Then, when a payment preparation operation is hit (Yes at step S154), the determination unit 153 further determines whether a product registration operation is included in the interval from the payment preparation operation that is hit in the search until the payment operation acquired by the acquisition unit 151 (step S155).

When no product registration operation is included (No at step S155), the determination unit 153 determines the duration of the payment preparation operation until the payment operation (step S156) to be the second mode.

When no payment preparation operation is hit in the search of the operation history in the checkout interval or when a product registration operation is included (No at step S154 or Yes at step S155), the determination unit 153 executes processing as follows. Specifically, the determination unit 153 determines, to be the second mode, a particular duration such as the interval of 30 seconds up to the payment operation (step S157).

Then, the determination unit 153 determines, to be the first mode, the other interval than the interval determined to be the second mode at step S156 or S157 in the checkout duration (step S158), and ends the processing.

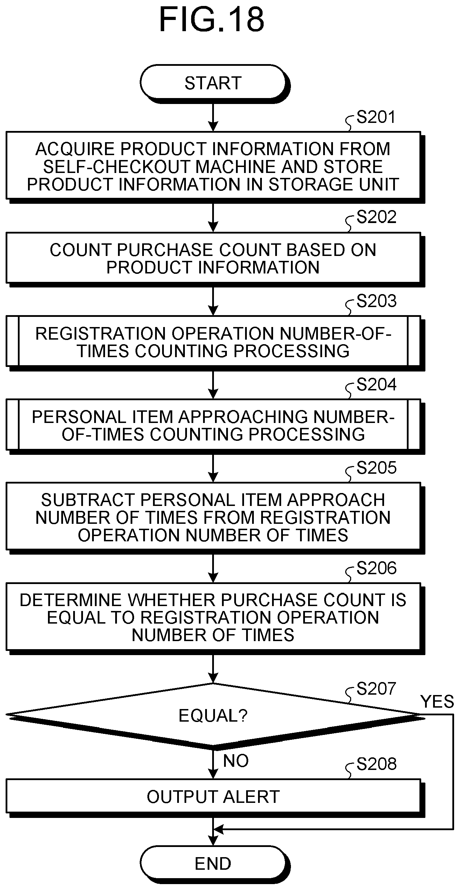

The following describes the procedure of processing at the information processing device according to the present embodiment. FIG. 18 is a flowchart illustrating the procedure of processing at the information processing device according to the present embodiment. As illustrated in FIG. 18, the acquisition unit 151 of the information processing device 100 acquires the product information 142A from the self-checkout machine 50 and stores the product information 142A in the storage unit 140 (step S201).

The counting unit 154 of the information processing device 100 counts the purchase count based on the product information (step S202). The counting unit 154 executes registration operation number-of-times counting processing (step S203). The counting unit 154 executes personal item approaching number-of-times counting processing based on the registration operation information (step S204).

The counting unit 154 of the information processing device 100 subtracts the personal item approach number of times counted at step S204 from the registration operation number of times counted at step S203 (step S205). Then, the output unit 155 of the information processing device 100 determines whether the purchase count is equal to the registration operation number of times from which the personal item approach number of times is subtracted (step S206).

When the purchase count is equal to the registration operation number of times from which the personal item approach number of times is subtracted (Yes at step S207), the output unit 155 ends the processing.

When the purchase count is not equal to the registration operation number of times from which the personal item approach number of times is subtracted (No at step S207), the output unit 155 outputs an alert to the administrator terminal 60 (step S208).

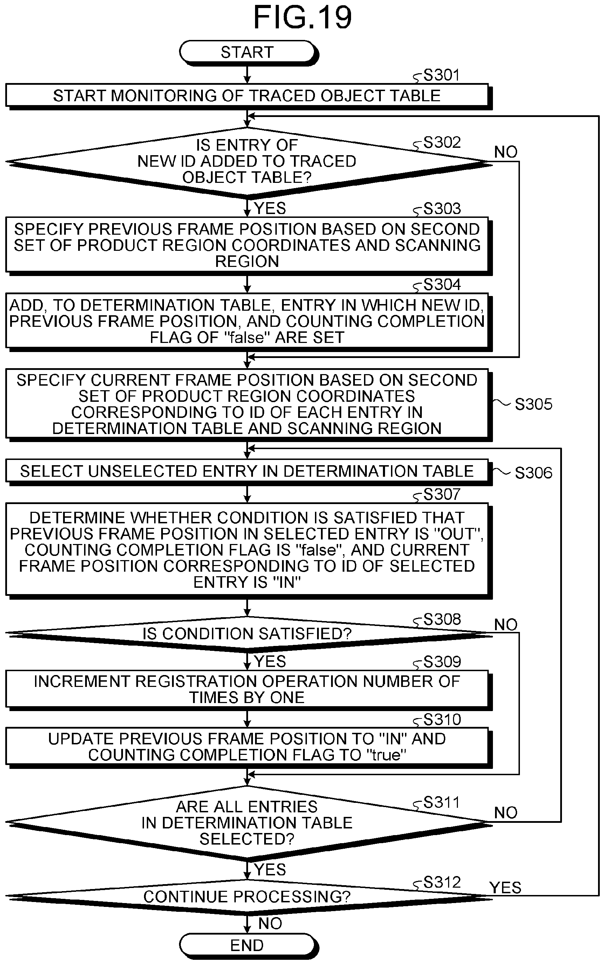

The following describes an exemplary procedure of the registration operation number-of-times counting processing described at step S203 in FIG. 18. FIG. 19 is a flowchart illustrating the procedure of the registration operation number-of-times counting processing. As illustrated in FIG. 19, the counting unit 154 of the information processing device 100 starts monitoring of the traced object table 144b (step S301).

When an entry of a new ID is added to the traced object table 144b (Yes at step S302), the counting unit 154 proceeds to step S303. When no entry of a new ID is added to the traced object table 144b (No at step S302), the counting unit 154 proceeds to step S305.

The counting unit 154 specifies the previous frame position based on the second set of product region coordinates in the entry of a new ID and the scanning region (step S303). The counting unit 154 adds, to the determination table 145, an entry in which the new ID, the previous frame position, and the counting completion flag of "false" are set (step S304).

The counting unit 154 specifies the current frame position based on the second set of product region coordinates corresponding to the ID of each entry in the determination table 145 and the scanning region (step S305). The counting unit 154 selects any unselected entry in the determination table 145 (step S306).

The counting unit 154 determines whether a condition is satisfied that the previous frame position in the selected entry is "OUT", the counting completion flag is "false", and the current frame position corresponding to the ID of the selected entry is "IN" (step S307).

When the condition is satisfied (Yes at step S308), the counting unit 154 proceeds to step S309. When the condition is not satisfied (No at step S308), the counting unit 154 proceeds to step S311.

The counting unit 154 increments the registration operation number of times by one (step S309). The counting unit 154 updates the previous frame position to "IN" and the counting completion flag to "true" in the selected entry (step S310).

When not all entries in the determination table 145 are selected (No at step S311), the counting unit 154 proceeds to step S306. When all entries in the determination table 145 are selected (Yes at step S311), the counting unit 154 proceeds to step S312.

When the processing is to be continued (Yes at step S312), the counting unit 154 proceeds to step S302. When the processing is not to be continued (No at step S312), the counting unit 154 ends the registration operation number-of-times counting processing.

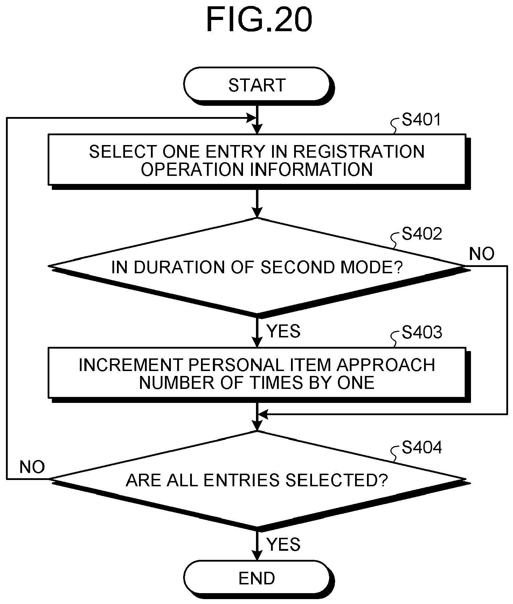

The following describes an exemplary procedure of the personal item approaching number-of-times counting processing described at step S204 in FIG. 18. FIG. 20 is a flowchart illustrating the procedure of the personal item approaching number-of-times counting processing. As illustrated in FIG. 20, the counting unit 154 of the information processing device 100 selects one of the entries included in the registration operation information 146 (step S401).

Subsequently, the counting unit 154 determines whether the date and time at which a product registration operation is specified, which is included in the entry selected at step S401, is in the duration of the second mode (step S402).

When the date and time at which a product registration operation is specified is in the duration of the second mode (Yes at step S402), the counting unit 154 increments the personal item approach number of times by one (step S403).

When the date and time at which a product registration operation is specified is not in the duration of the second mode, in other words, is in the duration of the first mode (No at step S402), the counting unit 154 skips processing of incrementing the personal item approach number of times by one.

Then, the processing at steps S401 to S403 is repeated until all entries included in the registration operation information 146 are selected (No at step S404). Thereafter, when all entries included in the registration operation information 146 are selected (Yes at step S404), the processing ends.

The following describes effects of the information processing device 100 according to the present embodiment. The information processing device 100 issues an alert based on the purchase count and the registration operation number of times, the purchase count being specified based on the product information 142A acquired from the self-checkout machine 50, the registration operation number of times being counted by comparing a region of a product and the scanning region. For example, when the registration operation number of times is different from the purchase count, it can be thought that product checkout omission has occurred, and thus it is possible to detect product checkout omission in accordance with an alert issued by the information processing device 100 based on the registration operation number of times and the purchase count.

Moreover, the information processing device 100 determines, as a user's possession, an object specified as being grasped by the user based on images obtained by capturing the user in front of the checkout machine in a particular duration before a time point at which a payment operation is performed among histories of user operations on the checkout machine. Thus, with the information processing device 100, it is possible to prevent a personal possession from being confused as a product at a store.

The above-described processing contents of the embodiment are exemplary, and the information processing device 100 may further execute other processing. The following describes other processing executed by the information processing device 100.

The above description of the embodiment is made on the example in which the registration operation number of times is incremented when change in the position of an object being traced between the previous frame and the current frame corresponds to movement from the outside to the inside of the scanning region 10b, but the method of counting the registration operation number of times is not limited thereto.

For example, the counting unit 154 of the information processing device 100 may count, as the registration operation number of times based on the traced object table 144b in the data table 144, a takeout operation number of times of an action in which the user takes out a product housed in a basket 2a. The counting unit 154 registers the takeout operation number of times as the registration operation information 146 to the storage unit 140. The following describes exemplary processing at the counting unit 154.

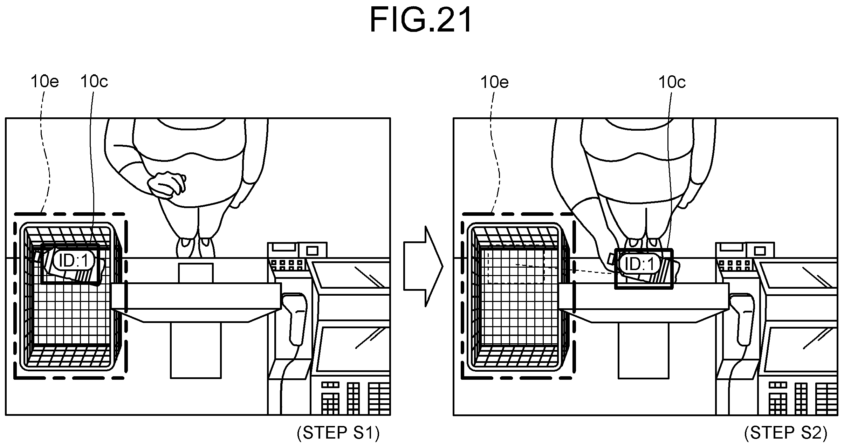

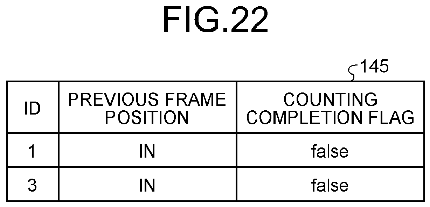

FIG. 21 is a diagram for describing the processing at the counting unit. FIG. 22 is a diagram illustrating an exemplary data structure of the determination table. Step S1 in FIG. 21 will be described below. The counting unit 154 holds the coordinates of a basket region 10e in advance. The counting unit 154 refers to the traced object table 144b, and when an entry of a new ID is added, the counting unit 154 adds, to the determination table 145 illustrated in FIG. 22, an entry in which an ID identical to the new ID is set. When adding the entry to the determination table 145, the counting unit 154 sets "false" to the counting completion flag. In the following description, for the purpose of description, the ID added to the determination table 145 is referred to as an ID "1". The ID "1" is an ID provided to the second set of product region coordinates corresponding to the region 10c of the product.

The counting unit 154 compares the second set of product region coordinates of the entry of the ID "1" in the traced object table 144b with the basket region 10e. When the second set of product region coordinates is not included in the basket region 10e, the counting unit 154 sets "OUT" to the previous frame position in the entry of the ID "1" added to the determination table 145. When the second set of product region coordinates is included in the basket region 10e, the counting unit 154 sets "IN" to the previous frame position in the entry of the ID "1" added to the determination table 145. In the example illustrated at step S1 in FIG. 21, the region 10c of the product corresponding to the second set of product region coordinates is included in the basket region 10e, and thus the previous frame position in the entry of the ID "1" added to the determination table 145 is set to "IN".

Step S2 in FIG. 21 will be described below. The counting unit 154 monitors the traced object table 144b, and compares the second set of product region coordinates corresponding to the ID "1" with the basket region 10e each time the traced object table 144b is updated. When the second set of product region coordinates (the region 10c of the product) corresponding to the ID "1" has moved to a region not included in the basket region 10e, the counting unit 154 refers to the entry of the ID "1" in the determination table 145 and refers to the previous frame position and the counting completion flag.

When the previous frame position is "IN" and the counting completion flag is "false" in the entry of the ID "1" in the determination table 145, the counting unit 154 increments the takeout operation number of times by one. After having incremented the takeout operation number of times by one, the counting unit 154 updates the previous frame position to "OUT" and updates the counting completion flag to "true". When the takeout operation number of times is incremented in this manner, the counting unit 154 adds, to the registration operation information 146, an entry associating the ID "1" of an object for which a product registration operation is specified with date and time at which the product registration operation of the ID "1" is specified.

When the previous frame position is "OUT" or when the counting completion flag is "true", the counting unit 154 skips processing of incrementing the takeout operation number of times by one.

The counting unit 154 repeatedly executes the above-described processing each time an entry of a new ID is added to the traced object table 144b. When an ID identical to the ID of the entry added to the traced object table 144b is identical to the ID of an entry registered to the determination table 145, the counting unit 154 skips processing of registering an entry corresponding to the new ID to the determination table 145.

When the takeout operation number of times is counted as the registration operation number of times, as well, it is possible to obtain the effects of the above-described embodiment by subtracting the personal item approach number of times from the takeout operation number of times and outputting an alert depending on whether the takeout operation number of times after the subtraction is equal to the purchase count.

The following describes other processing (1) executed by the information processing device 100. The counting unit 154 of the information processing device 100 executes processing by using a scanning region set in advance, but is not limited to this configuration. The counting unit 154 may analyze an image frame registered to the video buffer 141, specify a first area in which a shopping basket is disposed and a second area corresponding to the scanning region, and count the registration operation number of times by using the specified second area.

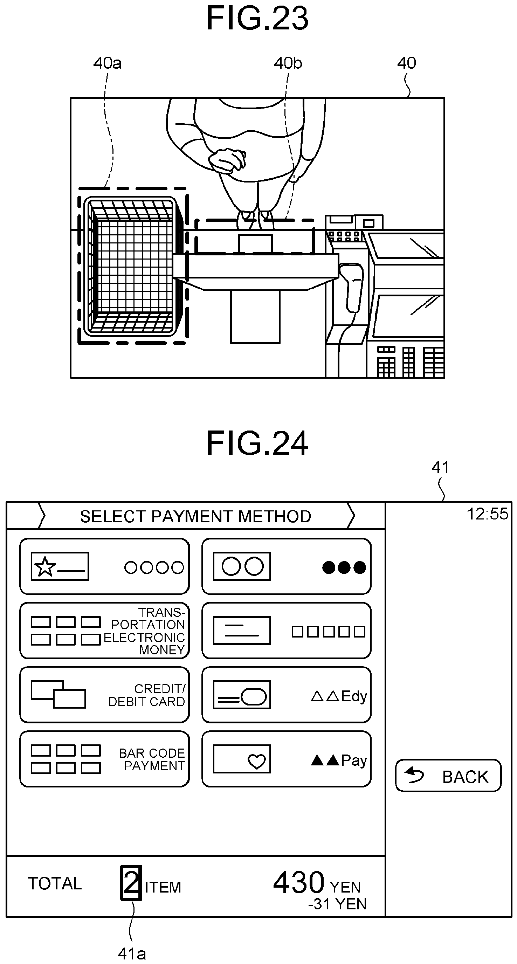

FIG. 23 is a diagram for describing the other processing (1). In the example illustrated in FIG. 23, a first area 40a and a second area 40b are specified in an image frame 40. The counting unit 154 may specify the first area 40a and the second area 40b by using a conventional technology such as pattern matching or may specify the first area 40a and the second area 40b by using a machine learning model subjected to machine learning. For example, the machine learning model is a model obtained by executing machine learning by using teacher data in which an image frame is an input and the coordinates of the first area and the second area are answer data.

When the self-checkout machine 50 has moved or the position of the camera 30 is changed while the counting unit 154 is executing processing, it is difficult to accurately count the registration operation number of times by executing processing by using a scanning region set in advance. However, it is possible to accurately specify a scanning region by analyzing an image frame registered to the video buffer 141 and specifying the second area corresponding to the scanning region, thereby accurately counting the registration operation number of times.

The following describes other processing (2) executed by the information processing device 100. In the above-described example, the information processing device 100 counts the purchase count and the personal item approach number of times based on the history information 142 acquired from the self-checkout machine 50, but is not limited to this configuration. When executing checkout processing, the self-checkout machine 50 displays the purchase count of products on a display screen. Thus, the information processing device 100 may specify the purchase count by executing image analysis on image frames of the display screen captured by the camera 30 (or another camera).

FIG. 24 is a diagram for describing the other processing (2). In FIG. 24, an image frame 41 corresponds to the checkout screen 41 of the self-checkout machine 50 illustrated in FIG. 10. A region 41a of the image frame 41 includes the region 41a indicating the purchase count of products. The counting unit 154 specifies the purchase count through image analysis on the region 41a. The counting unit 154 can specify a payment method selection operation through image analysis on the payment method selection area 42. The counting unit 154 can specify an operation on the point card selection button 44A through image analysis on the other-function call area 44. Although the checkout screen 41 is exemplarily described above, an operation on a GUI component corresponding to each kind of a point card can be specified on the point card selection screen 45 illustrated in FIG. 11 through image analysis.

Accordingly, the information processing device 100 can acquire history information even when not connected to the self-checkout machine 50.

The above description of the embodiment is made on the example in which the personal item approach number of times is subtracted from the registration operation number of times, but whether to increment the registration operation number of times may be controlled in accordance with whether an object grasped by the user is a personal item. For example, the above-described mode determination is executed in real time, and whether to increment the registration operation number of times is controlled in accordance with whether the mode is the first mode or the second mode when the condition at step S308 in FIG. 19 is satisfied. As an example, the counting unit 154 increments the registration operation number of times only when the mode is the second mode.

The following describes an exemplary hardware configuration of an information processing device 100. FIG. 25 is a diagram illustrating the exemplary hardware configuration. As illustrated in FIG. 25, the information processing device 100 includes a communication device 100a, a hard disk drive (HDD) 100b, a memory 100c, and a processor 100d. The components illustrated in FIG. 25 are mutually connected through a bus or the like.

The communication device 100a is a network interface card or the like and performs communication with other servers. The HDD 100b stores computer programs configured to achieve operation of the functions illustrated in FIG. 2, and DBs.

The processor 100d reads, from the HDD 100b or the like, a computer program configured to execute the same processing as each processing unit illustrated in FIG. 2 and loads the computer program onto the memory 100c, thereby activating a process of executing each function described with reference to FIG. 2 and the like. For example, the process executes the same function as each processing unit included in the information processing device 100. Specifically, the processor 100d reads, from the HDD 100b or the like, a computer program having the same function as each of the acquisition unit 151, the tracing unit 152, the determination unit 153, the counting unit 154, the output unit 155, and the like. Then, the processor 100d executes a process of executing the same processing as the acquisition unit 151, the tracing unit 152, the determination unit 153, the counting unit 154, the output unit 155, and the like.

In this manner, the information processing device 100 operates as a computer configured to execute a parameter calculation method by reading and executing a computer program. The information processing device 100 may achieve the function of the above-described embodiment by reading the above-described computer program from a recording medium through a medium reading device and executing the read above-described computer program. The computer program in this other embodiment is not limited to execution by the information processing device 100. For example, the present invention is also applicable to a case in which the computer program is executed by another computer or a server and a case in which the computer program is cooperatively executed by the other computer and the server.

The computer program may be distributed through a network such as the Internet. The computer program may be recorded on a computer-readable recording medium such as a hard disk, a flexible disk (FD), a CD-ROM, a magneto-optical disk (MO), or a digital versatile disc (DVD) and may be read from the recording medium and executed by a computer. Although a bar code is exemplarily described in the present embodiment, a code provided to a product is not limited to a one-dimensional code such as a bar code and may be any code including a two-dimensional code such as a Quick Response (QR) code.

## Claims

1. An action determination program comprising:
acquiring(S151) history information of a user operation on a checkout machine to which a product to be purchased is registered and that performs checkout processing of the registered product;
specifying(S113), based on an image obtained by capturing a user in front of the checkout machine, an action in which the user operates the checkout machine while grasping an object; and
determining(S403), based on the acquired history information, whether the action in which the user operates the checkout machine while grasping an object is an action in which a product to be purchased is registered to the checkout machine.

2. The action determination program according to claim 1, wherein
the history information(142) of a user operation on the checkout machine includes a first mode in which a code of a product to be purchased is read and the product is registered to the checkout machine and a second mode in which the product registered to the checkout machine is checked out, and
the determining includes determining(S403) that an object is not a product to be purchased when an action in which the user operates the checkout machine while grasping the object is detected during execution of the second mode at the checkout machine.

3. The action determination program according to claim 2, further including:
acquiring(S201) product information generated when the checkout machine reads a code of a product;
first counting(S202) a first number of times that indicates a purchase count of the product based on the acquired product information;
specifying(S113), based on an image obtained by capturing a user in front of the checkout machine, operation in which the user registers the product to the checkout machine;
second counting(S203) a second number of times of the specified operation in which the user registers the product to the checkout machine;
third counting(S205) a third number of times by subtracting, from the second number of times, a number of times that the determining determines that an object is not a product to be purchased; and
outputting(S208) an alert based on a difference between the first number of times and the third number of times.

4. The action determination program according to claim 2, wherein the determining includes determining(S157), to be the second mode based on the history information, a particular duration before a time point at which a payment operation is performed on the checkout machine.

5. The action determination program according to claim 4, wherein the determining includes determining(S156), to be the second mode based on the history information, an interval from a payment preparation operation corresponding to a preliminary action for making payment for the product to be purchased until the payment operation.

6. The action determination program according to claim 5, wherein the payment preparation operation(S154) is an operation to select a payment method of making payment for the product to be purchased or an operation related to a valuable value provided in accordance with a money amount of the product to be purchased.

7. An action determination method comprising:
acquiring(S151) history information of a user operation on a checkout machine to which a product to be purchased is registered and that performs checkout processing of the registered product;
specifying(S113), based on an image obtained by capturing a user in front of the checkout machine, an action in which the user operates the checkout machine while grasping an object; and
determining(S403), based on the acquired history information, whether the action in which the user operates the checkout machine while grasping an object is an action in which a product to be purchased is registered to the checkout machine.

8. The action determination method according to claim 7, wherein
the history information(142) of a user operation on the checkout machine includes a first mode in which a code of a product to be purchased is read and the product is registered to the checkout machine and a second mode in which the product registered to the checkout machine is checked out, and
the determining includes determining(S403) that an object is not a product to be purchased when an action in which the user operates the checkout machine while grasping the object is detected during execution of the second mode at the checkout machine.

9. The action determination method according to claim 8, further comprising:
acquiring(S201) product information generated when the checkout machine reads a code of a product;
first counting(S202) a first number of times that indicates a purchase count of the product based on the acquired product information;
specifying(S113), based on an image obtained by capturing a user in front of the checkout machine, operation in which the user registers the product to the checkout machine;
second counting(S203) a second number of times of the specified operation in which the user registers the product to the checkout machine;
third counting(S205) a third number of times by subtracting, from the second number of times, a number of times that the determining determines that an object is not a product to be purchased; and
outputting(S208) an alert based on a difference between the first number of times and the third number of times.

10. An action determination device(100) comprising:
an acquiring unit(151) configured to acquire history information of a user operation on a checkout machine to which a product to be purchased is registered and that performs checkout processing of the registered product;
a specifying unit(152) configured to specify, based on an image obtained by capturing a user in front of the checkout machine, an action in which the user operates the checkout machine while grasping an object; and
a determining unit(153) configured to determine, based on the acquired history information, whether the action in which the user operates the checkout machine while grasping an object is an action in which a product to be purchased is registered to the checkout machine.

11. The action determination device(100) according to claim 10, wherein
the history information(142) of a user operation on the checkout machine includes a first mode in which a code of a product to be purchased is read and the product is registered to the checkout machine and a second mode in which the product registered to the checkout machine is checked out, and
the determining unit(153) determines that an object is not a product to be purchased when an action in which the user operates the checkout machine while grasping the object is detected during execution of the second mode at the checkout machine.

12. The action determination device(100) according to claim 11, further including:
an acquiring unit(151) configured to acquire product information generated when the checkout machine reads a code of a product;
a first counting unit(154) configured to count a first number of times that indicates a purchase count of the product based on the acquired product information;
a specifying unit(152) configured to specify, based on an image obtained by capturing a user in front of the checkout machine, operation in which the user registers the product to the checkout machine;
a second counting unit(154) configured to count a second number of times of the specified operation in which the user registers the product to the checkout machine;
a third counting unit(154) configured to count a third number of times by subtracting, from the second number of times, a number of times that the determining determines that an object is not a product to be purchased; and
an output unit(155) configured to output an alert based on a difference between the first number of times and the third number of times.

13. The action determination device(100) according to claim 11, wherein the determining unit(153) determines, to be the second mode based on the history information, a particular duration before a time point at which a payment operation is performed on the checkout machine.

14. The action determination device(100) according to claim 13, wherein the determining unit(153) determines, to be the second mode based on the history information, an interval from a payment preparation operation corresponding to a preliminary action for making payment for the product to be purchased until the payment operation.

15. The action determination device according to claim 14, wherein the payment preparation operation(S154) is an operation to select a payment method of making payment for the product to be purchased or an operation related to a valuable value provided in accordance with a money amount of the product to be purchased.
